# DEMANDE DE BREVET EUROPEEN

(11) **EP 1 237 037 A2**
(43) Date de publication de la demande: **04.09.2002**
(21) Numéro de dépôt: 02075674.8
(22) Date de dépôt: 19.02.2002
(51) Int. Cl.: G02F 1/1335

(54) **Plaque frontale fibre optique d'une unité d'affichage**

(30) Priorité: 28.02.2001 FR 0102765
(71) Demandeur: Koninklijke Philips Electronics N.V., 5621 BA Eindhoven (NL)
(72) Inventeur: Prigent, Georges, 75008 Paris (FR)
(74) Mandataire: Chaffraix, Jean

(57) **Abrégé**

Cet appareil comporte un boîtier (1) dans lequel est prévu un emplacement (12) pour un écran formé d'une unité de visualisation (15) comprenant, entre autres, un ensemble de galette de fibres optiques (30) disposée du côté de la face avant, regardant l'utilisateur (28) et une unité d'affichage (29) comportant une multitude de pixels.

Grâce à la galette (30), il est possible d'obtenir plusieurs configurations d'écran (agrandissement de l'information fournie par l'unité (29) ou obtention d'un écran courbe avec une très bonne visibilité).

Applications : appareils de radiotéléphonie mobile, montres.

## Description

L'invention concerne un appareil comportant un boîtier dans lequel est prévu un emplacement pour un écran formé d'une unité de visualisation comprenant, entre autres, un ensemble de galette de fibres optiques disposée du côté de la face avant, regardant l'utilisateur et une unité d'affichage comportant une multitude de pixels.

L'invention concerne aussi une unité de visualisation convenant à un tel appareil.

Un tel appareil est décrit dans le document de brevet n° GB 2 058 384 qui comporte un ensemble de galette de fibres optiques. Entre autres effets, cette galette permet de « remonter » l'image fournie par l'unité d'affichage au niveau de la surface externe du boîtier, ce qui permet un meilleur confort de visualisation.

L'invention propose un appareil du genre cité dans le préambule qui permet de fournir des configurations de visualisation variées.

Pour cela, un tel appareil est remarquable en ce que les fibres de la galette sont déformées pour s'adapter à différentes configurations.

Une des configurations permet, par exemple, d'obtenir un écran convexe. Une autre configuration intéressante est un écran qui présente des caractères élargis.

La description suivante, faite en regard des dessins ci-annexés, le tout donné à titre d'exemples non limitatifs fera bien comprendre comment l'invention peut être réalisée. Sur les dessins :
La figure 1 montre un schéma de l'appareil conforme à l'invention.
La figure 2 montre plus en détail la structure d'un appareil conforme à l'invention.
La figure 3 montre une variante de réalisation d'un appareil conforme à l'invention.
La figure 4 montre une unité de visualisation fonctionnant par réflexion, conforme à l'invention.

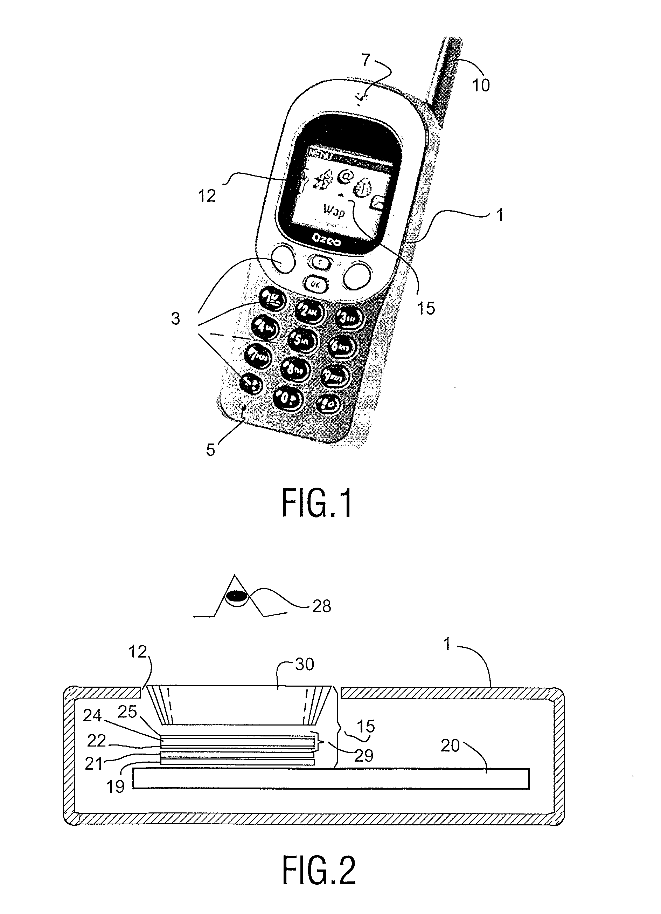

A la figure 1, on a représenté un appareil conforme à l'invention. Dans le cadre de l'exemple décrit, il s'agit d'un radiotéléphone mobile. Il se compose d'un boîtier 1 sur lequel sont disposés entre autres, un clavier 3, un microphone 5 et un écouteur 7. En outre, il sert de fixation pour une antenne 10. Il a été ménagé sur ce boîtier 1 une ouverture 12 pour une unité de visualisation 15.

La figure 2 montre une vue schématique, partiellement éclatée, d'une coupe de l'appareil conforme à l'invention. L'unité de visualisation 15 est formée par une boîte à lumière 19 posée sur la carte de circuit imprimé 20 qui comporte en grande partie tous les éléments de l'appareil. Cette boîte à lumière peut être réalisée au moyen de diodes LED ou au moyen d'un guide de lumière illuminé transversalement. Au-dessus se trouve un film réflectif ou semi-réflectif 21. Sur ce film se trouve une couche 22 dans laquelle se superposent les conducteurs qui commandent la visualisation et le premier polariseur. Au-dessus de cette couche se trouve la couche de cristal liquide 24 sur laquelle est disposée une autre couche 25 de conducteurs et de film polariseur. L'observateur 28 voit donc les informations affichées par voie de transmission. Les polariseurs doivent être mis en polarisation croisée. Les polariseurs et la couche 24 constituent l'unité d'affichage 29 où sont donc formées les images formées de pixels actifs ou passifs, destinées à être perçues par l'utilisateur.

Selon l'invention, sur la couche 24, est disposée une galette 30 de fibres optiques dont les fibres ont subi une déformation. Ainsi, sur la figure 2 la galette de fibres optiques se comporte comme un agrandisseur d'image. Ceci peut être obtenu en imposant, lors de la fabrication de cette galette, des pressions différentes aux extrémités. Le diamètre des fibres à l'extrémité en contact avec l'unité d'affichage est inférieur à celui des extrémités situées au niveau de la face avant. Pour éviter les problèmes de précision, le diamètre des fibres en contact avec la couche 25 doit être inférieur aux dimensions des pixels que l'unité d'affichage est capable d'afficher.

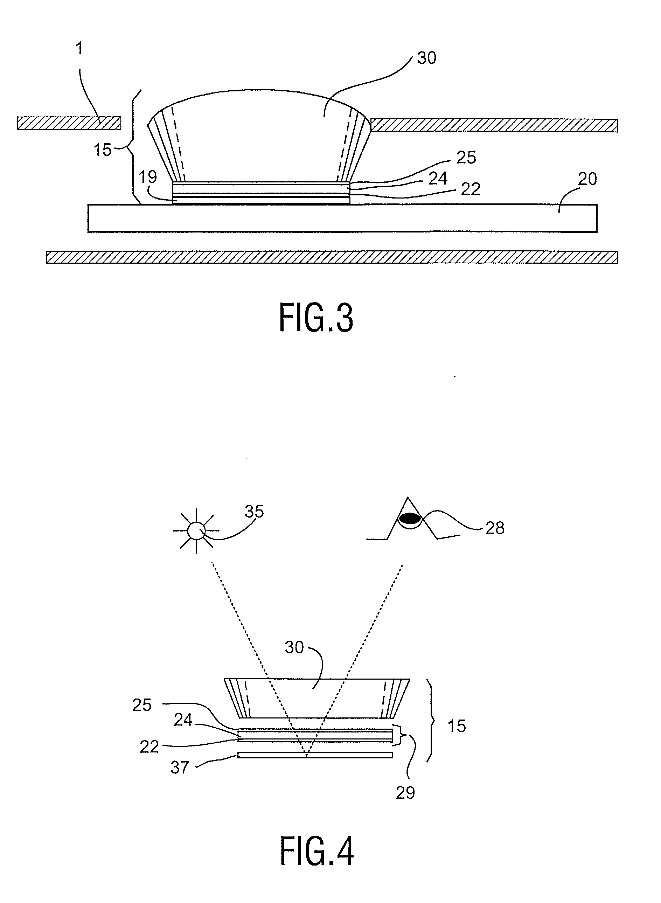

La figure 3 montre un autre exemple de réalisation d'un appareil conforme à l'invention. Les éléments communs avec ceux des figures précédentes portent les mêmes références. Dans cet exemple, l'écran a une surface gauche convexe, ce qui procure à l'utilisateur un confort de lecture amélioré. Cette surface gauche peut être obtenue par un usinage de la galette 30.

La figure 4, sur laquelle les éléments communs avec ceux des figures précédentes portent aussi les mêmes références, montre un autre exemple de réalisation de l'invention. Ici, on illustre le fait que cette unité peut être, aussi, utilisée en réflexion.

Pour cela, une source de lumière 35 est disposée du côté de l'observateur 28. La lumière fournie par cette source est réfléchie par un réflecteur 37 situé juste dessous la couche 24. La lumière traverse ainsi deux fois l'unité d'affichage 29.

Cette invention profite du fait que les polariseurs peuvent présenter des épaisseurs très fines et qu'ils peuvent côtoyer les conducteurs de commande (connus sous la dénomination ITO). Ces polariseurs peuvent être fournis par la société OPTIVA Inc :

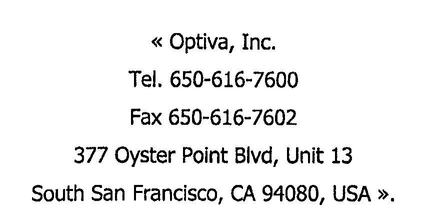

Bien que l'invention ait été décrite pour un appareil du genre radiotéléphone portable, l'invention peut aussi trouver d'autres applications, par exemple les montres et les calculettes.

## Revendications

1. Appareil comportant un boîtier dans lequel est prévu un emplacement pour un écran formé d'une unité de visualisation comprenant, entre autres, un ensemble de galette de fibres optiques disposée du côté de la face avant, regardant l'utilisateur et une unité d'affichage comportant une multitude de pixels, **caractérisé en ce que** les fibres de la galette sont déformées pour s'adapter à différentes configurations.

2. Appareil selon la revendication 1, **caractérisé en ce que** la face avant de la galette est gauche.

3. Appareil selon la revendication 2, **caractérisé en ce que** les fibres ont un diamètre qui change.

4. Appareil selon l'une des revendications 1 à 3, **caractérisé en ce que** l'unité de visualisation comporte une boîte de lumière située en dessous.

5. Appareil selon l'une des revendications 1 à 3, **caractérisé en ce que** l'unité de visualisation comporte un réflecteur situé en dessous pour réfléchir la lumière d'une source de lumière située au-dessus.

6. Appareil selon l'une des revendications 1 à 5, pour lequel l'unité d'affichage est du genre à cristaux liquides impliquant deux polariseurs croisés, **caractérisé en ce que** l'un des polariseurs est placé en arrière de la galette de fibres optiques.

7. Appareil selon l'une des revendications 1 à 5, **caractérisé en ce que** le diamètre des fibres en contact avec l'unité d'affichage est inférieur aux dimensions des pixels que l'unité d'affichage est capable d'afficher.

8. Unité de visualisation convenant à un appareil selon l'une des revendications 1 à 7 comprenant, entre autres, un ensemble de galette de fibres optiques disposée du côté de la face avant, regardant l'utilisateur et une unité d'affichage comportant une multitude de pixels, **caractérisée en ce que** les fibres de la galette sont déformées pour s'adapter à différentes configurations.

9. Unité de visualisation selon la revendication 8 comportant une unité d'affichage du genre à cristaux liquides impliquant deux polariseurs croisés, **caractérisée en ce que** l'un des polariseurs est placé en arrière de la galette de fibres optiques.

10. Unité de visualisation selon l'une des revendications 8 à 9, **caractérisée en ce que** le diamètre des fibres en contact avec l'unité d'affichage est inférieur aux dimensions des pixels que l'unité d'affichage est capable d'afficher.
